# EUROPÄISCHE PATENTANMELDUNG

(11) **EP 1 367 377 A2**
(43) Veröffentlichungstag der Anmeldung: **03.12.2003**
(21) Anmeldenummer: 03006520.5
(22) Anmeldetag: 22.03.2003
(51) Int. Cl.: G01M 13/00

(54) **Vorrichtung zur Simulation der Einbausituation von Schäuchen in Kraftfahrzeugen, insbesondere Turbolader- oder Kühlwasserschläuchen im Motorraum eines Kraftfahrzeuges**

(30) Priorität: 01.06.2002 DE 20208483 U
(71) Anmelder: Mündener Gummiwerk GmbH, 34346 Hann. Münden (DE)
(72) Erfinder: Möller, Thilo, 34346 Hann. Münden (DE); Dannenberg, Wolfgang, 34346 Hann. Münden (DE)
(74) Vertreter: WALTHER, WALTHER & HINZ Patentanwälte

(57) **Zusammenfassung**

Gegenstand der Erfindung ist eine Vorrichtung (1) zur Simulation der Einbausituation von Schläuchen, insbesondere Turbolader- oder Kühlwasserschläuchen im Motorraum eines Fahrzeuges, umfassend ein Gestell (2), das zwei Aufnahmen (10, 20) zur Aufnahme jeweils eines Schlauchendes eines Schlauches (30) aufweist, wobei die Aufnahmen (10, 20) jeweils um zwei Raumachsen verschwenkbar ausgebildet sind.

## Beschreibung

Die vorliegende Erfindung betrifft eine Vorrichtung zur Simulation der Einbausituation von Schläuchen in Fahrzeugen, insbesondere Turbolader- oder Kühlwasserschläuchen im Motorraum eines Fahrzeuges.

Bei der konstruktiven Ausgestaltung des Motorraumes eines Kraftfahrzeuges wird üblicherweise derart vorgegangen, dass der durch die Karosserie vorgegebene Motorraum mit den entsprechenden Aggregaten am Computer bestückt wird.

Der hierbei übrig bleibende, zur Verfügung stehende Raum muss dann zur Aufnahme der notwendigen Schläuche und Kabel dienen, wobei insbesondere für die Kühlwasserschläuche, aber auch für die Turboladerschläuche eine räumliche Gestaltung erforderlich ist, die durchaus komplex ist. Derartige Schläuche sind häufig dreidimensional gebogen, um bei dem im Motorraum vorhandenen Raum die entsprechenden Aggregate verbinden zu können. Wie bereits ausgeführt erfolgt die Konstruktion des Motors bzw. die Auslegung des Motorraumes mit den Aggregaten und den dazugehörigen Schläuchen und Kabeln zunächst am Computer mittels CAD. Es hat sich herausgestellt, dass der Schlauch auf Grund der Bewegungen, die er während des Betriebes des Motors unter Druckbelastung ausführt, eine Hüllkurve ausfüllt, die auf Grund des geringen zur Verfügung stehenden Raumes im Motorraum tatsächlich nicht vorhanden ist. Die Folge hiervon ist, dass der Schlauch an bestimmten Aggregaten scheuert und hierdurch die Lebensdauer des Schlauches stark eingeschränkt wird.

Der Erfindung liegt daher die Aufgabe zu Grunde, eine Vorrichtung zur Simulation der Einbausituation von Schläuchen, insbesondere Kühlwasseroder Turboladerschläuchen im Motorraum eines Fahrzeuges bereitzustellen, die insbesondere bereits im Vorfeld, d. h. dann, wenn das Fahrzeug sich noch in der Konstruktionsphase befindet, tatsächlich eine genaueste Erfassung der Einbausituation im späteren Motorraum ermöglicht.

Die Aufgabe wird erfindungsgemäß durch ein Gestell gelöst, das zwei Aufnahmen zur Aufnahme jeweils eines Schlauchendes aufweist, wobei die Aufnahmen jeweils um zwei Raumachsen verschwenkbar ausgebildet sind. Insbesondere durch die Verschwenkbarkeit der Aufnahmen um jeweils zwei Raumachsen wird es ermöglicht, die Einbaulage des Schlauches zu simulieren. Im Einzelnen wird hierbei derart vorgegangen, dass die Aufnahmen entsprechend den CAD-Koordinaten der entsprechenden Anschlüsse oder Flansche im Motorraum in der Vorrichtung NC gesteuert angefahren werden. Nach Einbau des Schlauches, dessen Geometrie in Form von CAD-3D-Daten vorliegt, kann dann ermittelt werden, inwiefern CAD-Modell und Realität deckungsgleich sind.

Weitere vorteilhafte Merkmale ergeben sich aus den Unteransprüchen.

So ist nach einem Merkmal der Erfindung vorgesehen, dass jede Aufnahme in mindestens eine Raumrichtung verfahrbar ist, wobei vorzugsweise eine Aufnahme in eine Raumrichtung, und die zweite Aufnahme in zwei weitere Raumrichtungen verfahrbar ist, so dass auch eine Relativbewegung der einzelnen Teile, mit denen der Schlauch verbunden ist, also beispielsweise Motor und Kühler, simuliert werden kann.

Nach einem weiteren vorteilhaften Merkmal der Erfindung ist vorgesehen, dass mindestens eine Aufnahme, vorzugsweise jedoch jede Aufnahme eine Messeinrichtung zur Erfassung der durch den Schlauch im eingebauten Zustand hervorgerufenen Kräfte und Momente aufweist, um ermitteln zu können, welche Kräfte und Momente in welchem Einbauzustand auf den Flansch des jeweiligen Aggregates, die der Schlauch verbindet, wirken. Denn nur hierdurch kann zuverlässig verhindert werden, dass auf Grund einer Dauerbeanspruchung, beispielsweise der Flansch eines Kühlers, frühzeitig zerstört wird. Um die Einbausituation noch realistischer nachvollziehen zu können, ist vorgesehen, dass der Schlauch in der Vorrichtung beheizbar ist, wobei zusätzlich auch vorgesehen sein kann, den Schlauch in der Vorrichtung mit Innendruck zu beaufschlagen. Sowohl das Beheizen des Schlauches, als auch dessen Beaufschlagung mit Innendruck bewirken immer auch eine Veränderung in der Kontur des Schlauches mit der Folge, dass sich hierdurch auch die Kräfte und Momente, die auf die Anschlussflansche wirken, ändern.

Nach einem weiteren vorteilhaften Merkmal der Erfindung weist die Vorrichtung eine Steuerung für die Bewegung der Aufnahmen auf, wobei durch die Steuerung die Aufnahmen in der Vorrichtung derart positionierbar sind, dass diese der Einbausituation des Schlauches im Motor entsprechen. Hierdurch wird die Möglichkeit eröffnet, anhand der Koordinaten bei der Konstruktion des Schlauches am Computer diese Einbausitutation quasi 1 : 1 in der Vorrichtung umzusetzen, so dass nur noch eine Übernahme der Daten der theroretischen Einbausituation aus dem Computer in die Vorrichtung notwendig ist, um ermitteln zu können, ob der Schlauch tatsächlich die Erwartungen hinsichtlich der Einbausituation erfüllt.

Weiterhin kann die Vorrichtung eine Einrichtung zur Bestimmung der Kontur des eingebauten Schlauches aufweisen. Hierdurch besteht die Möglichkeit, quasi im iterativen Verfahren, die optimale Einbausituation des Schlauches zu ermitteln, und diese Daten dann dem Konstrukteur des Fahrzeuges zu übermitteln, damit er diese Informationen bei der Konstruktion bzw. Auslegung des Raumbedarfes im Motorraum des Fahrzeuges berücksichtigt. Diese Einrichtung zur Bestimmung der Kontur des Schlauches im in der Vorrichtung eingebauten Zustand stellt sich als in alle Raumrichtungen beweglicher Arm dar, der mit einer zur Erfassung der Daten der Kontur entsprechenden Messeinrichtung ausgerüstet ist.

Anhand der Zeichnungen wird die Erfindung nachstehend beispielhaft näher erläutert.

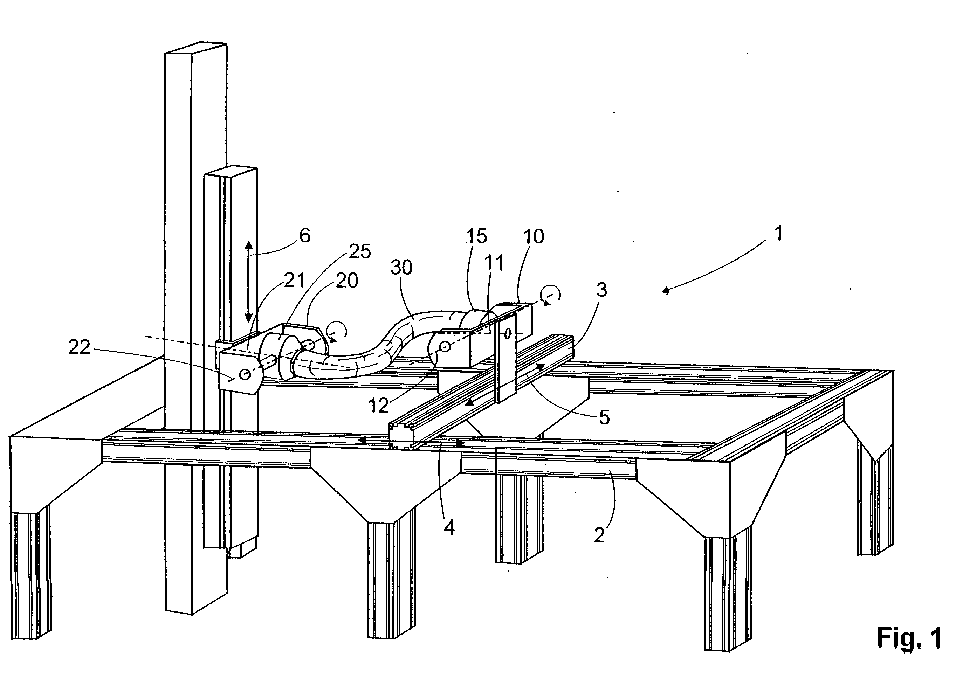

- Figur 1: zeigt die Vorrichtung mit dem Gestell;

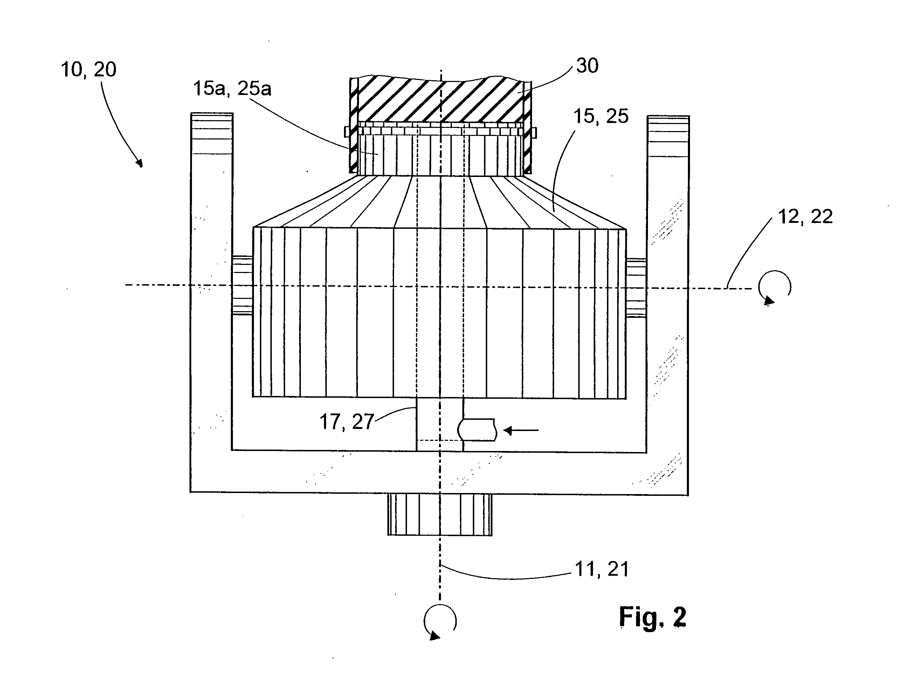

- Figur 2: zeigt die Aufnahme für das eine Ende des Schlauches in einer vergrößerten Darstellung gemäß Figur 1.

Die insgesamt mit 1 bezeichnete Vorrichtung umfasst das Gestell 2 sowie die beiden Aufnahmen 10 und 20. Zwischen den beiden Aufnahmen 10, 20 befindet sich der mit 30 bezeichnete Schlauch. Die Aufnahme 10 ist hierbei an einer Traverse 3 angeordnet, die in Richtung des Pfeiles 4 verschieblich oder verfahrbar ist. Auf der Traverse 3 sitzt - wie bereits ausgeführt - die Aufnahme 10, wobei die Aufnahme auf der Traverse 3 in Richtung des Pfeiles 5 verfahrbar ist. Die Aufnahme 10 selbst ist sowohl um die Achse 11, als auch um die Achse 12 verschwenkbar.

In Bezug auf die Aufnahme 20 gilt ebenfalls, dass diese um zwei Achsen verschwenkbar ist, und zwar ebenfalls um eine Achse 21 und um eine Achse 22. Darüber hinaus gilt, dass die Aufnahme 20 in Richtung des Pfeiles 6 verfahrbar ist. Sowohl die Aufnahme 10, als auch die Aufnahme 20 besitzen jeweils eine Messeinrichtung 15 bzw. 25, wobei an der jeweiligen Messeinrichtung 15 bzw. 25 ein Flansch 15a, 25a zur Aufnahme des Schlauches 30 angeordnet ist. Die Messeinrichtung ist als Kraft- und Momentaufnehmer ausgebildet, um die durch den Schlauch auf die Flansche der Aufnahmen ausgeübten Kräfte ermitteln zu können. Um den Schlauch 30 zu beheizen oder mit Innendruck zu beaufschlagen ist durch die Messeinrichtung ein Schlauchansatz 17, 27 geführt, durch den gegebenenfalls pulsierend heiße Gase oder Flüssigkeiten durchgeführt werden können.

## Patentansprüche

1. Vorrichtung (1) zur Simulation der Einbausituation von Schläuchen, insbesondere Turbolader- oder Kühlwasserschläuchen im Motorraum eines Fahrzeuges, umfassend ein Gestell (2), das zwei Aufnahmen (10, 20) zur Aufnahme jeweils eines Schlauchendes eines Schlauches (30) aufweist, wobei die Aufnahmen (10, 20) jeweils um zwei Raumachsen verschwenkbar ausgebildet sind.

2. Vorrichtung (1) nach Anspruch 1,
**dadurch gekennzeichnet,**
**dass** jede Aufnahme (10, 20) in mindestens eine Raumrichtung verfahrbar ist.

3. Vorrichtung (1) nach Anspruch 1,
**dadurch gekennzeichnet,**
**dass** eine Aufnahme (10, 20) in eine Raumrichtung und die zweite Aufnahme (10, 20) in zwei weitere Raumrichtungen verfahrbar ist.

4. Vorrichtung (1) nach Anspruch 1,
**dadurch gekennzeichnet,**
**dass** mindestens eine Aufnahme (10, 20), vorzugsweise jede Aufnahme (10, 20) eine Messeinrichtung (15, 25) zur Erfassung der durch den Schlauch (30) im eingebauten Zustand hervorgerufenen Kräfte und Momente aufweist.

5. Vorrichtung (1) nach Anspruch 1,
**dadurch gekennzeichnet,**
**dass** der Schlauch (30) in der Vorrichtung (1) beheizbar ist.

6. Vorrichtung (1) nach Anspruch 1,
**dadurch gekennzeichnet,**
**dass** der Schlauch (30) in der Vorrichtung (1) mit Innendruck beaufschlagbar ist.

7. Vorrichtung (1) nach Anspruch 1,
**dadurch gekennzeichnet,**
**dass** die Vorrichtung (1) eine Steuerung für die Aufnahmen (10, 20) aufweist, wobei durch die Steuerung die Aufnahmen in der Vorrichtung (1) derart positionierbar sind, dass diese der Einbausituation des Schlauches (30) im Motorraum entsprechen.

8. Vorrichtung (1) nach Anspruch 1,
**dadurch gekennzeichnet,**
**dass** die Vorrichtung eine Einrichtung zur Bestimmung der Hüllkurve des eingebauten Schlauches (30) aufweist.
